# EUROPEAN PATENT APPLICATION

(11) **EP 4 443 369 A1**
(43) Date of publication of application: **09.10.2024**
(21) Application number: 22900897.4
(22) Date of filing: 29.09.2022
(51) Int. Cl.: G06Q 30/0251

(54) **COMPUTER SYSTEM ENABLING TARGETED ADVERTISING BY USING PERSONAL INFORMATION STORED IN PLURALITY OF DATABASE UNITS OF PLURALITY OF PARTNER COMPANIES, AND METHOD AND PROGRAM EXECUTED IN SAID COMPUTER SYSTEM**

(30) Priority: 30.11.2021 JP 2021194471
(71) Applicant: SBI Sumishin Net Bank, Ltd., Tokyo 106-0032 (JP)
(72) Inventor: MARUYAMA, Noriaki, Tokyo 106-0032 (JP); ARIZONO, Yuichi, Tokyo 106-0046 (JP)
(74) Representative: Uexküll & Stolberg
(86) International application number: PCT/JP2022/036550
(87) International publication number: WO 2023/100462

(57) **Abstract**

This computer system enables targeted advertising by using personal information that is stored in a plurality of database units of a plurality of partner companies. This computer system is provided with: a means for receiving information indicating a desired advertising condition for presenting an advertisement in an advertising space, the desired advertising condition including a target condition for identifying a target of the advertisement; a means for accessing a plurality of database units to thereby acquire identifiers of one or more users satisfying the target condition from among the identifiers of a plurality of users stored in each of the plurality of database units; and a means for transmitting the identifiers of the one or more users satisfying the target condition to a device of a media company.

## Description

### [Technical Field]

The present invention relates to a computer system that enables targeting advertisement utilizing personal information accumulated in a plurality of database units of a plurality of affiliated companies and a method and a program executed in the computer system.

### [Background Art]

Targeting advertisement on a browser has been known (see, for example, Non Patent Literature 1).

### [Citation List]

### [Non Patent Literature]

[NPL 1] DDAI (Data Driven Advertising Initiative), "About targeting advertisement", [online], [retrieved on September 30, 2021], internet <URL: https://www.ddai.info/about_targeting>

### [Summary of Invention]

### [Technical Problem]

A conventional targeting advertisement is not carried out by identifying a specific individual. Thus, the precision of targeting advertisement was low.

The present invention was made in view of the above-discussed problem, wherein the purpose is to provide a computer system that enables certain and highly precise targeting advertisement compared to the past by utilizing personal information accumulated in a plurality of database units of a plurality of affiliated companies and a method and a program executed in said computer system.

### [Solution to Problem]

In one aspect of the present invention, the computer system of the present invention enables targeting advertisement utilizing personal information accumulated in a plurality of database units of a plurality of affiliated companies, wherein the computer system is configured to enable communication with an apparatus of a media company that manages a medium providing an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein the computer system comprises: a means of receiving information showing a desired advertisement condition for presenting an advertisement to the advertisement frame, wherein the desired advertisement condition comprises a target condition for identifying a target of the advertisement; a means of obtaining an identifier of one or more user satisfying the target condition among identifiers of the plurality of users stored in each of the plurality of database units by accessing the plurality of database units; and a means of sending the identifier of the one or more user satisfying the target condition to the apparatus of the media company.

In one example of the present invention, the target condition at least comprises a condition associated with a first company among the plurality of affiliated companies and a condition associated with a second company among the plurality of affiliated companies, wherein the second company is different from the first company, wherein the means of obtaining the identifier of the one or more user satisfying the target condition may comprise: a means of accessing a first database unit of the first company to obtain an identifier of at least one user satisfying the condition associated with the first company among identifiers of users of a first group stored in the first database unit, wherein the first database unit is one of the plurality of database units; a means of accessing a second database unit of the second company to obtain an identifier of at least one user satisfying the condition associated with the second company among identifiers of users of a second group stored in the second database unit, wherein the second database unit is one of the plurality of database units; and a means of identifying an identifier of one or more user that is at least common between the at least one user satisfying the condition associated with the first company and the at least one user satisfying the condition associated with the second company as the identifier of the one or more user satisfying the target condition based on the identifier of the at least one user satisfying the condition associated with the first company and the identifier of the at least one user satisfying the condition associated with the second company.

In one embodiment of the present invention, the identifier may be a telephone number, or a mail address, or a combination thereof.

In one embodiment of the present invention, the computer system may further comprise a means of executing a processing for selling the advertisement frame to an advertisement company that wishes to display the advertisement on the advertisement frame.

In one embodiment of the present invention, the computer system is further configured to enable communication with an apparatus of the advertisement company, wherein information showing the desired advertisement condition is received from the apparatus of the advertisement company, wherein the desired advertisement condition further comprises a timing condition showing a timing to present the advertisement, wherein the computer system may further comprise: a means of notifying the timing condition to the media company in a state of being associated with the advertisement frame.

In one embodiment of the present invention, the advertisement company is a first advertisement company, wherein the computer system may further comprise: a means of managing and/or tracking resale of the advertisement frame from the first advertisement company to a second advertisement company, wherein the second advertisement company is different from the first advertisement company.

In one aspect of the present invention, the method of the present invention is a method executed in a computer system that enables targeting advertisement utilizing personal information accumulated in a plurality of database units of a plurality of affiliated companies, wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein the computer system comprises a processor unit, wherein the method comprises: receiving, by the processor unit, information showing a desired advertisement condition for presenting an advertisement to the advertisement frame, wherein the desired advertisement condition comprises a target condition for identifying a target of the advertisement; obtaining, by the processor unit, an identifier of one or more user satisfying the target condition among identifiers of the plurality of users stored in each of the plurality of database units by accessing the plurality of database units; and sending, by the processor unit, the identifier of the one or more user satisfying the target condition to the apparatus of the media company.

In one aspect of the present invention, the program of the present invention is a program executed in a computer system that enables targeting advertisement utilizing personal information accumulated in a plurality of database units of a plurality of affiliated companies, wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein the computer system comprises a processor unit, wherein, when executed by the processor unit, the program has the processor unit at least execute the following: receiving information showing a desired advertisement condition for presenting an advertisement to the advertisement frame, wherein the desired advertisement condition comprises a target condition for identifying a target of the advertisement; obtaining an identifier of one or more user satisfying the target condition among identifiers of the plurality of users stored in each of the plurality of database units by accessing the plurality of database units; and sending the identifier of the one or more user satisfying the target condition to the apparatus of the media company.

In one aspect of the present invention, the computer system of the present invention is a computer system that enables targeting advertisement utilizing personal information accumulated in a plurality of database units of a plurality of affiliated companies, wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein a database unit of the media company is one of the plurality of database units, wherein the computer system comprises: a means of receiving a desired advertisement condition for presenting an advertisement to the advertisement frame, wherein the desired advertisement condition comprises a target condition for identifying a target of the advertisement; a means of obtaining an identifier of one or more user satisfying the target condition among identifiers of the plurality of users stored in each of the plurality of database units by accessing the plurality of database units other than the database unit of the media company; a means of identifying an identifier of at least one user stored in the database unit of the media company among identifiers of one or more user satisfying the target condition by accessing the database unit of the media company; and a means of sending the identifier of the at least one user to the apparatus of the media company.

In one embodiment of the present invention, the target condition at least comprises a condition associated with a first company among the plurality of affiliated companies and a condition associated with a second company among the plurality of affiliated companies, wherein the second company is different from the first company, wherein the means of obtaining the identifier of the one or more user satisfying the target condition may comprise: a means of accessing a first database unit of the first company to obtain an identifier of at least one user satisfying the condition associated with the first company among identifiers of users of a first group stored in the first database unit, wherein the first database unit is one of the plurality of database units; a means of accessing a second database unit of the second company to obtain an identifier of at least one user satisfying the condition associated with the second company among identifiers of users of a second group stored in the second database unit, wherein the second database unit is one of the plurality of database units; and a means of identifying an identifier of one or more user that is at least common between the at least one user satisfying the condition associated with the first company and the at least one user satisfying the condition associated with the second company as the identifier of the one or more user satisfying the target condition based on the identifier of the at least one user satisfying the condition associated with the first company and the identifier of the at least one user satisfying the condition associated with the second company.

In one embodiment of the present invention, the identifier may be a telephone number, or a mail address, or a combination thereof.

In one embodiment of the present invention, the computer system may further comprise a means of executing a processing for selling the advertisement frame to an advertisement company that wishes to display the advertisement on the advertisement frame.

In one embodiment of the present invention, the computer system is further configured to enable communication with an apparatus of the advertisement company, wherein the desired advertisement condition is received from the apparatus of the advertisement company, wherein the desired advertisement condition further comprises a timing condition showing a timing to present the advertisement, wherein the computer system may further comprise: a means of notifying the timing condition to the media company in a state of being associated with the advertisement frame.

In one embodiment of the present invention, the advertisement company is a first advertisement company, wherein the computer system may further comprise: a means of managing and/or tracking resale of the advertisement frame from the first advertisement company to a second advertisement company, wherein the second advertisement company is different from the first advertisement company.

In one aspect of the present application, the method of the present invention is a method executed in a computer system that enables targeting advertisement utilizing personal information accumulated in a plurality of database units of a plurality of affiliated companies, wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein a database unit of the media company is one of the plurality of database units, wherein the computer system comprises a processor unit, wherein the method comprises: receiving, by the processor unit, a desired advertisement condition for presenting an advertisement to the advertisement frame, wherein the desired advertisement condition comprises a target condition for identifying a target of the advertisement; obtaining, by the processor unit, an identifier of one or more user satisfying the target condition among identifiers of the plurality of users stored in each of the plurality of database units by accessing the plurality of database units other than the database unit of the media company; identifying, by the processor unit, an identifier of at least one user stored in the database unit of the media company among identifiers of one or more users satisfying the target condition by accessing the database unit of the media company; and sending, by the processor unit, the identifier of the at least one user to the apparatus of the media company.

Ine one aspect of the present application, the program of the present invention is a program executed in a computer system that enables targeting advertisement utilizing personal information accumulated in a plurality of database units of a plurality of affiliated companies, wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein a database unit of the media company is one of the plurality of database units, wherein the computer system comprises a processor unit, wherein, when executed by the processor unit, the program has the processor unit at least execute the following: receiving a desired advertisement condition for presenting an advertisement to the advertisement frame, wherein the desired advertisement condition comprises a target condition for identifying a target of the advertisement; obtaining an identifier of one or more user satisfying the target condition among identifiers of the plurality of users stored in each of the plurality of database units by accessing the plurality of database units other than the database unit of the media company; identifying an identifier of at least one user stored in the database unit of the media company among identifiers of one or more user satisfying the target condition by accessing the database unit of the media company; and sending the identifier of the at least one user to the apparatus of the media company.

### [Advantageous Effects of Invention]

The present invention can provide a computer system that enables certain and highly precise targeting advertisement compared to the past by utilizing personal information accumulated in a plurality of databases of a plurality of affiliated companies and a method and a program executed in said computer system.

### [Brief Description of Drawings]

[Figure 1] Figure **1** is a diagram showing an example of the flow for realizing a new targeting advertisement made by transversally referring to a plurality of database units of a plurality of affiliated companies.
[Figure 2] Figure **2** is a diagram showing an example of the configuration of a system **200** for realizing a new targeting advertisement made by transversally referring to a plurality of database units of a plurality of affiliated companies.
[Figure 3A] Figure **3A** is a diagram showing an example of the configuration of information stored in a user database unit **261.**
[Figure 3B] Figure **3B** is a diagram showing an example of the configuration of information stored in a media company database unit **262.**
[Figure 3C] Figure **3C** is a diagram showing an example of the configuration of information stored in an identifier database unit **263.**
[Figure 3D] Figure **3D** is a diagram showing an example of the configuration of information stored in an advertisement frame database unit **264.**
[Figure 3E] Figure **3E** is a diagram showing an example of the configuration of information stored in a database unit **231₁** of an affiliated company A.
[Figure 3F] Figure **3F** is a diagram showing an example of the configuration of information stored in a database unit **231₂** of an affiliated company B.
[Figure 4] Figure **4** is a diagram showing an example of the flow executed in a system **200.**
[Figure 5] Figure **5** is a diagram showing an example of the flow executed in a computer system **210.**

### [Description of Embodiments]

The terms used herein are defined below.

*"Operation company" refers to a company that transversally operates personal information accumulated in a plurality of database units of other plurality of companies.

*"Affiliated company" refers to a company affiliated with an operation company.

*"Media company" refers to a company that provides and/or manages a medium a user can access. An advertisement frame that can present an advertisement is provided on the medium.

*"Advertisement company" refers to a company that wishes to present an advertisement on a medium that a media company provides and/or manages.

### 1. A new targeting advertisement made by transversally referring to a plurality of database units of a plurality of affiliated companies

The Applicant suggests a new targeting advertisement made by transversally referring to a plurality of database units of a plurality of affiliated companies. This new targeting advertisement intends to provide to an advertisement company a set of an advertisement frame and personal information with the cooperation between an operation company that transversally operates personal information accumulated in a plurality of database units of a plurality of affiliated companies and a media company that manages a medium that provides an advertisement frame which is a place where an advertisement is displayed and to utilize the personal information and implement a desired advertisement of the advertisement company in the advertisement frame. According to this new targeting advertisement, the operation company and the media company cooperate in the following form.

The operation company sells to the advertisement company an advertisement frame on a medium provided by the media company. The advertisement company provides data of the advertisement to the media company (e.g., via the operation company or directly). The advertisement company provides a desired advertisement condition (e.g., a target condition showing a user that is the target of the advertisement, a timing condition showing the timing to present the advertisement) to the operation company, and the operation company refers to the plurality of database units of the plurality of affiliated companies and obtains an identifier of one or more user satisfying the target condition among identifiers of a plurality of users within the plurality of database units of the plurality of affiliated companies. Furthermore, the operation company provides an identifier of one or more user satisfying the target condition to the media company in a form in which the condition under which these identifiers were obtained is unknown. This causes the media company to obtain an identifier of at least one user stored in the database unit of the media company (e.g., identifier of at least one user who is user-registered to the media company) among the identifiers of the one or more user satisfying the target condition. Furthermore, when a user identified by the identifier of the at least one user obtained in such a manner views the advertisement frame on the medium of the media company (e.g., when accessing a medium where the advertisement frame is inserted, when a predetermined time has passed after accessing the medium where the advertisement frame is inserted, or the like), the media company is capable of presenting on the advertisement frame an advertisement to the user identified by the identifier of the at least one user that had been obtained. As such, the operation company would identify the user by confirming the user that satisfies the desired advertisement condition based on personal information accumulated within the plurality of database units of the plurality of affiliated companies, and display the advertisement to the user on the advertisement frame. Thus, it is possible to realize certain and highly precise targeting advertisement compared to the past. Furthermore, an identifier of a user may be any identifier as long as it is possible to identify a user. An identifier of a user may be, for example, but not limited to, mail address, telephone number (e.g., telephone number of a landline of a house where a user lives, a telephone number of a portable telephone owned by a user), a combination of a mail address and a telephone number, a device ID unique to an apparatus owned by a user (e.g., portable telephone, car, refrigerator, microwave oven), number identifying the individual that owns an individual number card, or any combination thereof. A mail address or telephone number of a portable telephone may be mainly used as an identifier of a user.

The embodiment of the present invention is explained below while referring to the drawings.

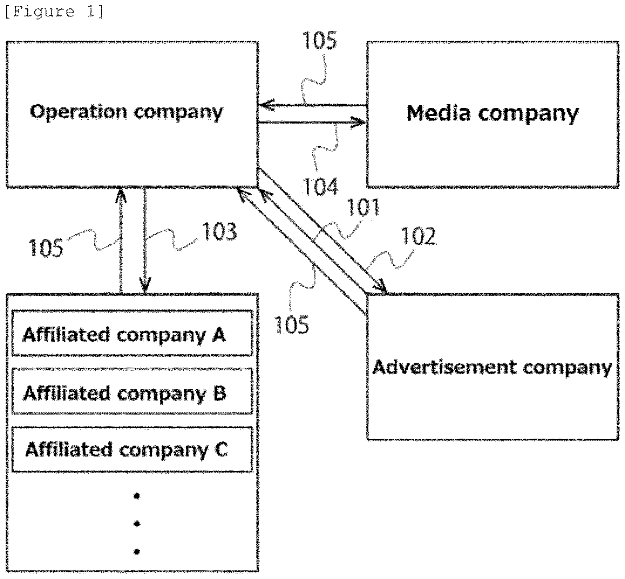

Figure **1** shows an example of the flow for realizing a new targeting advertisement made by transversally referring to a plurality of database units of a plurality of affiliated companies. Furthermore, the operation company would sell an advertisement frame on a medium provided by the media company. The advertisement frame may be sold in a state wherein the number of times of the advertisement and/or the time period for the advertisement within the advertisement frame is set. In addition, each step and processing explained while referring to Figure **1** may be executed by a computer system or an apparatus, or may be executed by an employee of a company. Each step shown in Figure **1** is explained in detail below.

Step **S101:** An advertisement company that wishes advertisement in an advertisement frame on a medium of a media company sends a purchase request for purchasing the advertisement frame to an operation company. The purchase request for the advertisement frame may comprise advertisement data showing a desired advertisement content of the advertisement company, a desired advertisement condition for presenting a desired advertisement of the advertisement company to the advertisement frame, and the like. The desired advertisement condition may comprise, for example, a target condition for identifying a target of a desired advertisement, a timing condition showing the timing to present a desired advertisement, and the like.

Step **S102:** The operation company sells the advertisement frame to the advertisement company in response to the purchase request for the advertisement frame. In this case, the operation company may record the sold advertisement frame, the desired advertisement condition of the advertisement company and the desired advertisement of the advertisement company in association with one another in order to manage and track the secondary distribution market of the sold advertisement frame.

Step **S103:** The operation company obtains an identifier of one or more user satisfying the target condition comprised in the desired advertisement condition among the database units of at least one affiliated company of a plurality of affiliated companies.

Step **S103** of Figure **1****,** for example, may be executed in response to the operation company's receiving of the desired advertisement condition of the advertisement company from the advertisement company, or may be executed in response to the operation company's receiving of an identification request that requests identification of a user that satisfies the desired advertisement condition of the advertisement company from the media company. The operation company is capable of obtaining an identifier of one or more user satisfying the target condition in real time by executing step **S103** of Figure **1** in response to the receipt of the identification request that requests identification of a user satisfying the desired advertisement condition of the advertisement company from the media company.

Step **S104:** The operation company sends the identifier of the one or more user satisfying the target condition to the media company. Alternatively, when a hash value obtained by hashing the identifier of the one or more user satisfying the target condition is used for the media company to identify a user, the operation company may hash the identifier of the one or more user satisfying the target condition and send the hash value of the identifier of the one or more user satisfying the target condition to the media company instead of the identifier of the one or more user satisfying the target condition.

The media company identifies an identifier of at least one user stored in the database unit of the media company among the identifies of the one or more user satisfying the target condition in response to the receipt of the identifier of the one or more user satisfying the target condition (or hash value thereof). This causes the media company to be in the state of being able to present a desired advertisement of the advertisement company on the advertisement frame that had been purchased by the advertisement company.

The media company determines whether or not the user identified by the identifier of the at least one user that had been identified satisfies the timing condition. When the user identified by the identifier of the at least one user that had been identified is determined as satisfying the timing condition, the media company presents the desired advertisement of the advertisement company to a user identified by the identifier of the at least one user that had been identified in the advertisement frame on the medium of the media company.

Step **S105:** The media company, the advertisement company and each of the plurality of affiliated companies pay the operation company the utilization fee of a system provided by the operation company. Regarding the timing for the media company to pay the system utilization fee, the timing for the advertisement company to pay the system utilization fee, and the timing for each of a plurality of affiliated companies to pay the system utilization fee, said timings may all be different, any two of said timings may be the same, or all of said timings may be the same.

In a specific embodiment of a new targeting advertisement made by transversally referring to a plurality of database units of a plurality of affiliated companies, the media company is a retail company **1** that administers a portable site (provided that the retail company **1** is not one of the plurality of affiliated companies affiliated with the operation company), the medium is an application of the portable site, the advertisement company is an airline company **2,** the advertisement is an advertisement of a recommended travel plan of the airline company **2,** the affiliated company is a sales company **3** that provides an EC site, the sales company **3** sells at least a suitcase on the EC site, the target condition comprised in the desired advertisement condition is "being a person having a purchase history or viewing history of a suitcase in the EC site of the sales company **3** within the past 2 weeks", the timing condition comprised in the desired advertisement condition is "when accessing the application of the portal site of the retail company **1",** in which case the following steps are possible:
Step (1) The operation company comprises information showing the "sales company **3"** in the target condition, whereby the identifier of one or more user having a purchase history or viewing history of a suitcase within the past 2 weeks is obtained from the database unit of the sales company **3;**
Step (2) The operation company provides to the retail company **1** the identifier of the one or more user obtained in step (1);
Step (3) The retail company **1** identifies an identifier of at least one user stored within the database unit of the retail company **1** among the identifiers of the one or more user obtained in step (1);
Step (4) The retail company **1** determines whether or not a user who accessed the application of the portal site of the retail company **1** is the user identified by the identifier of the at least one user identified in step (3);
Step (5) When the user who accessed the application of the portal site of the retail company **1** is the user identified by the identifier of the at least one user identified in step (3), the retail company **1** can present a recommended travel plan of the airline company **2** to the user in the advertisement frame on the application of the portal site of the retail company **1.**

As such, in the new targeting advertisement of the present invention, it is possible to identify a user by an identifier of a user accumulated within a plurality of database units and carry out advertisement of a recommended travel plan of the airline company **2** in the advertisement frame on the application of the portal site of the retail company **1** to a user having a purchase history or viewing history of a suitcase in the EC site of the sales company **3** within the past 2 weeks.

Furthermore, the identification of information showing the "sales company **3"** from the target condition in step (1) may be realized by the airline company **2** inputting the desired advertisement condition to the interface of the operation company in the form of being able to identify the "sales company **3"** from the target condition and the airline company **2** providing the operation company the target condition of the desired advertisement condition, or may be realized by the AI function or machine-learning function of the operation company extracting the information showing the "sales company **3"** from the target condition.

Alternatively, when the target condition is "being a person having a purchase history or viewing history of a suitcase within the past 2 weeks" (i.e., when the target condition does not comprise information regarding an affiliated company (information designating an affiliated company)), the operation company may randomly determine a database unit to be referred to among a plurality of database units of a plurality of affiliated companies to obtain an identifier of one or more user satisfying the target condition in the determined database unit, or may obtain an identifier of one or more user satisfying the target condition among all of the plurality of database units of the plurality of affiliated companies, in step (1') instead of step (1). Alternatively, the operation company may identify the attribute/classifier "sales" from the "purchase history or viewing history of a suitcase" to obtain an identifier of one or more user satisfying the target condition among identifiers of a plurality of users stored in a plurality of database units of a plurality of sales companies comprising the sales company **3** having the attribute/classifier "sales". The identification of the attribute/classifier may be achieved by, for example, configuring the input of the target condition to enable identification of the attribute/classifier, or may be achieved by utilizing the AI function or machine-learning function of the computer system of the operation company based on the description of the target condition.

Alternatively, when a search site company **4** providing a search site exists as a different affiliated company and the target condition is "being a person having a purchase history or viewing history of a suitcase in the EC site of the sales company **3** within the past 2 weeks and having a search history regarding travel in the search site of the search site company **4"** (i.e., when the target condition does not comprise information regarding an affiliated company (e.g., information designating an affiliated company)), since the information showing the "sales company **3"** is comprised in the target condition, the operation company may obtain an identifier of one or more user having a purchase history or viewing history of a suitcase within the past 2 weeks from the database unit of the sales company **3,** and since the information showing the "search site company **4"** is comprised in the target condition, the operation company may obtain an identifier of one or more user having search history regarding travel from the database unit of the search site company **4,** to obtain an identifier of one or more user that is at least common between both the identifier of the one or more user having a purchase history or viewing history of a suitcase within the past 2 weeks and the identifier of the one or more user having a search history regarding travel as an identifier of one or more user satisfying the target condition in step (1") instead of step (1).

Alternatively, when the media company is one of the plurality of affiliated companies affiliated with the operation company, step (2) is omitted, and the subject carrying out the action of step (3) is the operation company, wherein the operation company provides the retail company **1** the identifier of the at least one user identified in step (3) after step (3) and before step (4).

As discussed above, since an identifier of a user stored in the database unit of an affiliated company (e.g., personal information such as portable telephone number or mail address of a user) is used by the operation company, when a user is registered as a member of the affiliated company (i.e., when personal information or the like of the user himself/herself is registered in a database unit of an affiliated company), the user may be requested to accept that the personal information of the registered user may be used by the operation company (by the computer system of the affiliated company or the operation company). When the user accepts that the personal information of the registered user may be used by the operation company, the operation company would be able to obtain the personal information of the user from the database unit of the affiliated company. As a return, the user may be able to receive return of profit associated with the affiliated company or the operation company from the affiliated company or the operation company at a predetermined timing. The predetermined timing, for example, but not limited to, may be the time when the personal information of the user is used by the operation company for advertisement in the primary distribution market, may be the time when the personal information of the user is used by the operation company for advertisement in the secondary distribution market, or may be the time of both of the above. How such return of profit is realized does not matter. Such return of profit may be realized using, for example, but not limited to, cash-back, point, mile, product, voucher, or the like.

### 2. Configuration of a system for realizing a new targeting advertisement made by transversally referring to a plurality of database units of a plurality of affiliated companies

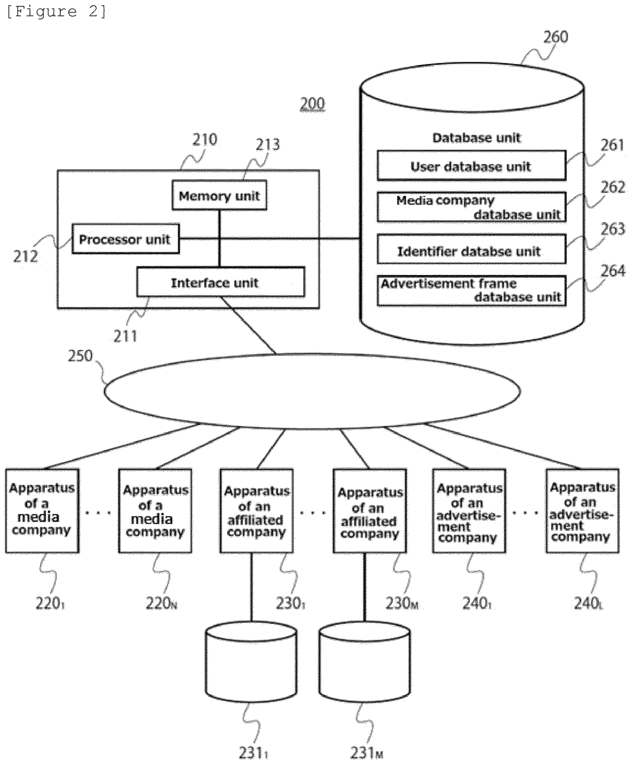

Figure **2** shows an example of the configuration of the system **200** for realizing a new targeting advertisement made by transversally referring to a plurality of database units of a plurality of affiliated companies.

In the embodiment shown in Figure **2****,** the system **200** comprises a computer system **210** that is managed/administered by the operation company that transversally operates personal information accumulated in a plurality of database units of a plurality of affiliated companies, apparatuses **220₁** to **220_{N}** of a media company that manages a medium that provides an advertisement frame where an advertisement is displayed, apparatuses **230₁** to **230_{M}** of the plurality of affiliated companies affiliated with the operation company, and apparatuses **240₁** to **240_{L}** of the advertisement company that wishes to present an advertisement to a user. The computer system **210** is configured to enable communication with each of the apparatuses **220₁** to **220_{N}** of the media company, each of the apparatuses **230₁** to **230_{M}** of the plurality of affiliated companies, and each of the apparatuses **240₁** to **240_{L}** of the advertisement company, via the internet **250.** In this regard, N and L are integral numbers that are 1 or greater, and M is an integral number that is 2 or greater.

The computer system **210** is an information processing system that executes the processing for the operation company. In the embodiment shown in Figure **2****,** the computer system **210** comprises an interface unit **211,** a processor unit **212** comprising one or more CPU (Central Processing Unit), and a memory unit **213.** The hardware configuration of the computer system **210** is not particularly limited as long as the function thereof can be realized, and may be configured with a single machine, or may be configured by combining a plurality of machines.

The interface unit **211** controls the communication with each of the apparatuses **220₁** to **220_{N}** of the media company, controls the communication with each of the apparatuses **230₁** to **230_{M}** of the plurality of affiliated companies, and controls the communication with each of the apparatuses **240₁** to **240_{L}** of the advertisement company.

A program required to execute a processing, data required to execute the program, and the like are stored in the memory unit **213.** In this regard, how the program is stored in the memory unit **213** does not matter. For example, the program may be pre-installed in the memory unit **213.** Alternatively, the program may be installed in the memory unit **213** by being downloaded via a network such as the internet **340,** or may be installed in the memory unit **213** via a storage medium such as an optical disk or a USB.

The processor unit **212** controls the operation of the entire computer system **210.** The processor unit **212** reads the program stored in the memory unit **213** and executes the program. This enables the computer system **210** to function as an apparatus that executes a desired step, and enables the processor unit **212** of the computer system **210** to operate as a means for achieving a desired function.

The computer system **210** is connected to a database unit **260.** The database unit **260** comprises a user database unit **261,** a media company database unit **262,** an identifier database unit **263,** and an advertisement frame database unit **264 .**

Each of the apparatuses **220₁** to **220_{N}** of the media company is configured to enable communication with the computer system **210** via the internet **250.** The apparatus **220₁** of the media company is configured to execute a processing for the media company. Each of the apparatuses **220₁** to **220_{N}** of the media company may have, for example, the same configuration as the computer system **210.**

Each of the apparatuses **230₁** to **230_{M}** of the plurality of affiliated companies is configured to enable communication with the computer system **210** via the internet **250.** The apparatus **230₁** of the affiliated company is configured to execute a processing for the affiliated company. Each of the apparatuses **230₁** to **230_{M}** of the plurality of affiliated companies may have, for example, the same configuration as the computer system **210.**

The apparatus **230₁** of the affiliated company is connected to a database unit **231₁** of the affiliated company, ... the apparatus **230_{M}** of the affiliated company is connected to a database unit **231_{M}** of the affiliated company.

Each of the apparatuses **240₁** to **240_{L}** of the advertisement company is configured to be able to communicate with the computer system **210** via the internet **250.** The apparatus **240₁** of the advertisement company is configured to execute a processing for the advertisement company. Each of the apparatuses **240₁** to **240_{L}** of the advertisement company may have, for example, the same configuration as the computer system **210.**

Furthermore, in the embodiment shown in Figure **2****,** it is explained that each of the apparatuses **220₁** to **220_{N}** of the media company, each of the apparatuses **230₁** to **230_{M}** of the plurality of affiliated companies, and each of the apparatuses **240₁** to **240_{L}** of the advertisement company can communicate with the computer system **210** via the internet **250,** but the present invention is not limited thereto. It is possible to use any type of network instead of the internet **250.**

In addition, in the embodiment shown in Figure **2****,** the database unit **260** is provided outside the computer system **210,** but the present invention is not limited thereto. It is also possible to provide the database unit **260** inside the computer system **210.** The configuration of the database unit **260** is not limited to a specific hardware configuration. For example, the database unit **260** may be configured with a single hardware part, or may be configured with a plurality of hardware parts. For example, the database unit **260** may be configured as a single external hard disk apparatus of the computer system **210,** or may be configured as a storage on a cloud connected via a network. Furthermore, the configuration of each database unit comprised in the database unit **260** is also not limited to a specific hardware configuration. For example, each database unit comprised in the database unit **260** also may be configured with a single hardware part, or may be configured with a plurality of hardware parts.

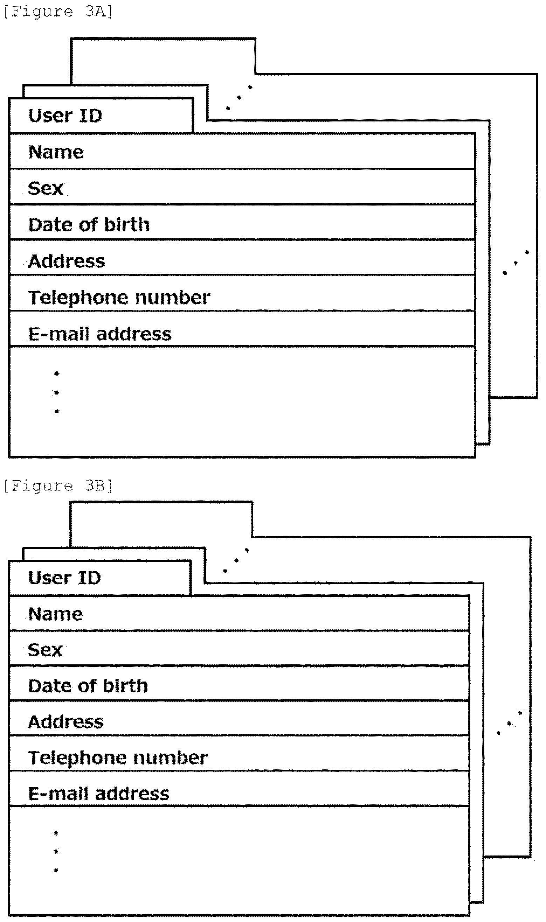

Figure **3A** shows an example of the configuration of information stored in a user database unit **261.**

Information regarding a user is stored in the user database unit **261.** In the embodiment shown in Figure **3A****,** information regarding a user can be identified by information for identifying the user (user ID). Information regarding a user comprises, for example, user ID, user name, sex, date of birth, address, telephone number, E-mail address, and the like. A user ID stored in the user database unit **261** is effective within the user database unit **261.**

Figure **3B** shows an example of the configuration of information stored in a media company database unit **262.**

Information regarding the media company is stored in the media company database unit **262.** In the embodiment shown in Figure **3B****,** information regarding a media company can be identified by information for identifying the media company (media company ID). Information regarding a media company further comprises, for example, company name, location, name of the provided medium, and the like of the media company. Information regarding a media company is associated with the medium ID for identifying the medium provided by the media company.

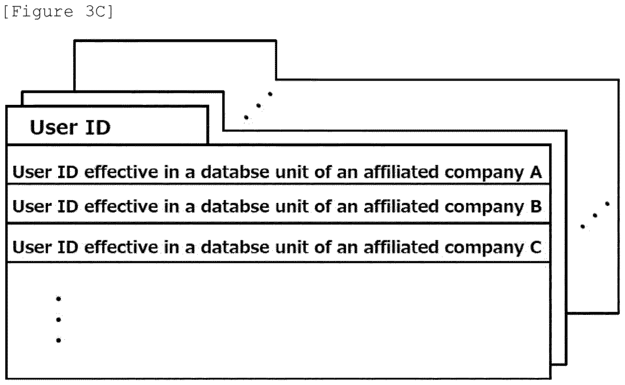

Figure **3C** shows an example of the configuration of information stored in the identifier database unit **263.**

Identifier information showing the corresponding relationship between the user ID within the user database unit **261** and the user ID within each database unit of each affiliated company is stored in the identifier database unit **263.** In the embodiment shown in Figure **3C****,** the corresponding relationship between the user ID within the user database unit **261** and the user ID within the database unit **231₁** of the affiliated company A (i.e., user ID that is effective within the database unit **231₁** of the affiliated company A), the user ID within the database unit **231₂** of the affiliated company B, the user ID within the database unit **231₃** of the affiliated company C, and the like is shown.

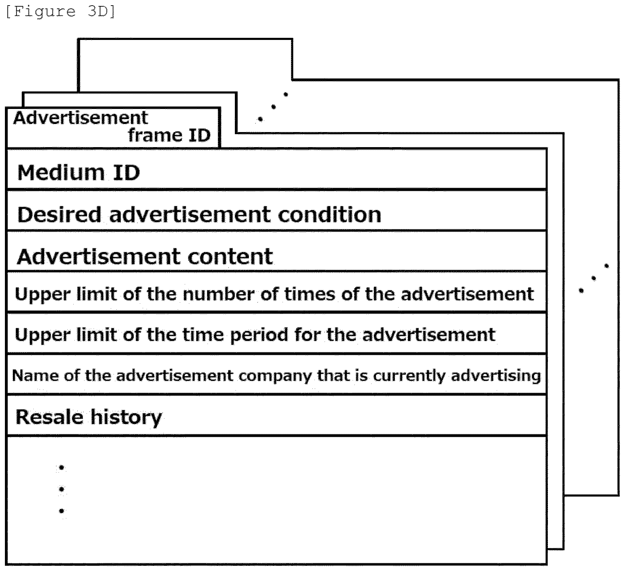

Figure **3D** shows an example of the configuration of information stored in the advertisement frame database unit **264 .**

Information regarding the advertisement frame is stored in the advertisement frame database unit **264.** Information regarding an advertisement frame can be identified by information for identifying the advertisement frame (advertisement frame ID). In the embodiment shown in Figure **3D****,** information regarding an advertisement frame comprises, for example, desired advertisement condition of the advertisement company (e.g., a target condition showing a user who is the target of the advertisement, a timing condition showing the timing to present the advertisement), data showing the content of the advertisement (i.e., advertisement data), upper limit of the number of times of the advertisement, the upper limit of the time period for the advertisement, name of the advertisement company that is currently advertising, resale history, and the like.

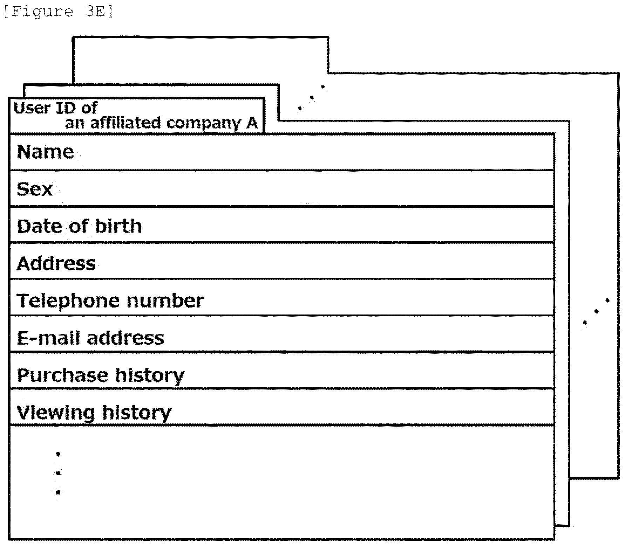

Figure **3E** shows an example of the configuration of information stored in a database unit **231₁** of an affiliated company A.

Information regarding a user managed in the affiliated company A is stored in the database unit **231₁** of the affiliated company A. Information regarding a user managed in an affiliated company A can be identified by a user ID within the database unit **231₁** of the affiliated company A. In the embodiment shown in Figure **3E****,** information regarding a user managed in the affiliated company A comprises, for example, user name, sex, date of birth, address, telephone number, E-mail address, purchase history, viewing history, and the like. In addition, the attribute/classifier of the affiliated company A may be associated with the information regarding the user managed in the affiliated company A. In the embodiment shown in Figure **3E****,** the affiliated company A may be, for example, a sales company that sells a product on an EC site.

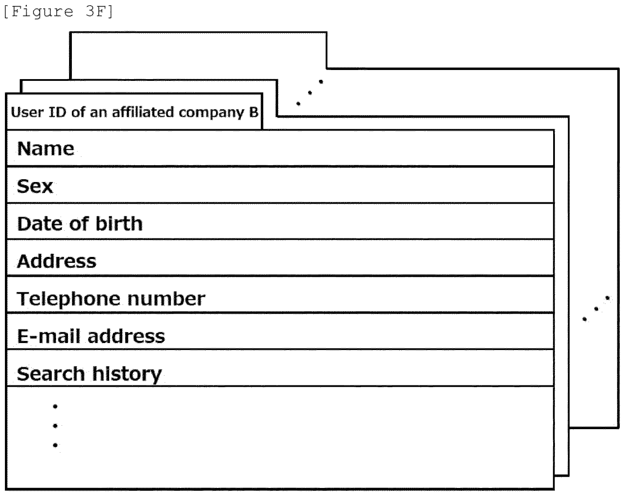

Figure **3F** shows an example of the configuration of information stored in a database unit **231₂** of an affiliated company B.

Information regarding a user managed in the affiliated company B is stored in the database unit **231₂** of the affiliated company B. Information regarding a user managed in an affiliated company B can be identified by a user ID within the database unit **231₂** of the affiliated company B. In the embodiment shown in Figure **3F****,** information regarding a user managed in the affiliated company B comprises, for example, user name, sex, date of birth, address, telephone number, E-mail address, search history, and the like. In addition, the attribute/classifier of the affiliated company B may be associated with the information regarding the user managed in the affiliated company B. In the embodiment shown in Figure **3F****,** the affiliated company B may be, for example, a search site company that provides a search site.

### 4. Processing of a computer system

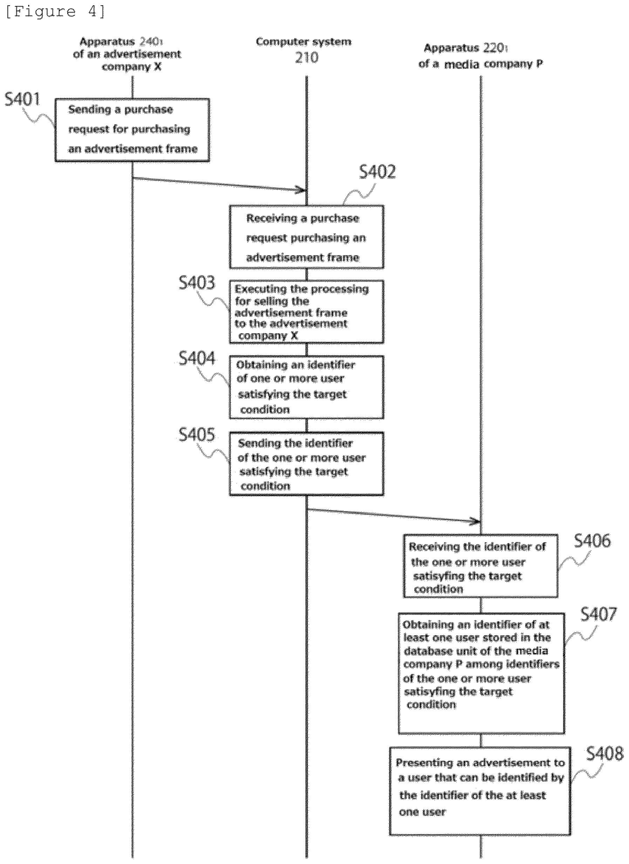

Figure **4** shows an example of the flow executed in the system **200.** In the embodiment shown in Figure **4****,** among the plurality of steps shown in Figure **4****,** step **S401** is executed by, for example, a processor unit of an apparatus **240₁** of an advertisement company X, steps **S402** to **S405** are executed by, for example, a processor unit **211** of a computer system **210** of an operation company, and steps **S406** to **S408** are executed by, for example, a processor unit of an apparatus **220₁** of a media company P. Each step shown in Figure **4** is explained below.

Step **S401:** The apparatus **240₁** of the advertisement company X sends to the computer system **210** a purchase request for purchasing the advertisement frame on the medium provided by the media company P. The purchase request comprises a desired advertisement condition of the advertisement company X and advertisement data showing the content presented as advertisement. The desired advertisement condition of the advertisement company X comprises a target condition showing the target of the advertisement and a timing condition showing the timing to present the advertisement. The processing of step **S401** is achieved by, for example, inputting information required for the purchase of the advertisement frame (e.g., name of the medium, position of the advertisement frame that is sought to be purchased, name of the advertisement company X, method of payment, and the like) on the interface provided by the computer system **210** via the apparatus **240₁** of the advertisement company X.

In addition, the desired advertisement condition of the advertisement company X may be sent to the computer system **210** separately from the purchase request at any timing before step **S404** shown in Figure **4****.** The advertisement data of the advertisement company X may also be sent to the computer system **210** separately from the purchase request. The advertisement data of the advertisement company X may be transferred to the apparatus **220₁** of the media company P via an interface provided by the computer system **210** at any timing before step **S410.**

Step **S402:** The computer system **210** receives the purchase request for purchasing the advertisement frame from the apparatus **240₁** of the advertisement company X.

Step **S403:** The computer system **210** executes the processing for selling the advertisement frame to the advertisement company X. The processing for selling the advertisement frame to the advertisement company X may comprise, for example, the processing that enables the computer system **210** to manage the advertisement frame to be sold by associating the advertisement frame ID of the advertisement frame to be sold, the desired advertisement condition of the advertisement company and the advertisement data of the advertisement company with one another and storing them within the advertisement frame database unit **264 .**

The computer system **210** may send to the apparatus **220₁** of the media company P the information showing the timing condition in the state of being associated with the advertisement frame (e.g., together with the advertisement frame ID) at any timing after step **S403** and before step **S408** to notify the timing condition to the media company P.

Step **S404:** The computer system **210** accesses a plurality of database units **231₁** to **231_{M}** connected to apparatuses **230₁** to **230_{M}** of a plurality of affiliated companies, respectively, to obtain an identifier of one or more user satisfying the target condition comprised in the desired advertisement condition of the advertisement company X among identifiers of a plurality of users stored in the plurality of database units **231₁** to **231_{M}.** This processing, for example, may be executed in response to the receipt of the desired advertisement condition of the advertisement company X by the computer system **210,** or may be executed in response to the receipt of the identification request that requests identification of a user satisfying the desired advertisement condition of the advertisement company X by the computer system **210** from the apparatus **220₁** of the media company P. The processing of obtaining the an identifier of the one or more user satisfying the target condition may be achieved by, for example, identifying and obtaining a user ID associated with the "information regarding the user" comprising information that satisfies the target condition within the plurality of database units **231₁** to **231_{M}.**

For example, when the target condition at least comprises a condition associated with the affiliated company A among the plurality of affiliated companies and a condition associated with the affiliated company B among the plurality of affiliated companies, the processing of step **S404** would comprise, for example, the following:
accessing the database unit **231₁** of the affiliated company A to obtain an identifier of at least one user satisfying the condition associated with the affiliated company A among identifiers of users of a first group stored in the database unit **231₁** of the affiliated company A;
accessing the database unit **231₂** of the affiliated company B to obtain an identifier of at least one user satisfying the condition associated with the affiliated company B among identifiers of users of a second group stored in the database unit **231₂** of the affiliated company B; and
identifying an identifier of one or more user that is at least common between both the at least one user satisfying the condition associated with the affiliated company A and the at least one user satisfying the condition associated with the affiliated company B as an identifier of one or more user satisfying the target condition based on the identifier of the at least one user satisfying the condition associated with the affiliated company A and the identifier of the at least one user satisfying the condition associated with the affiliated company B.

When identifiers of users of the first group stored in the database unit **231₁** of the affiliated company A is not effective in the database unit **231₂** of the affiliated company B, and when identifiers of users of the second group stored in the database unit **231₂** of the affiliated company B is not effective in the database unit **231₁** of the affiliated company A, the computer system **210** identifies an identifier of one or more user that is at least common between both the at least one user satisfying the condition associated with the affiliated company A and the at least one user satisfying the condition associated with the affiliated company B by, for example, referring to the identifier database unit **263** and converting each of the identifier of the at least one user satisfying the condition associated with the affiliated company A and the identifier of the at least one user satisfying the condition of the affiliated company B into a user identifier of the identifier database unit **263** of the computer system **210.**

For example, when the target condition does not comprise a condition regarding an affiliated company (e.g., a condition designating an affiliated company), the processing of step **S404** comprises, for example, the following:
randomly determining a database unit to be referred to among a plurality of database units of a plurality of affiliated companies; and
accessing the determined database unit to obtain an identifier of one or more user satisfying the target condition among identifiers of a plurality of users stored in the determined database unit.

Alternatively, when the target condition does not comprise a condition regarding an affiliated company (e.g., a condition designating an affiliated company), the processing of step **S404** comprises, for example, accessing a plurality of database units of all of a plurality of affiliated companies to obtain an identifier of one or more user satisfying the target condition among identifiers of a plurality of users stored in the plurality of database units of all of the plurality of affiliated companies.

Alternatively, when the target condition does not comprise a condition regarding an affiliated company (e.g., a condition designating an affiliated company), the processing of step **S404** comprises, for example, the following:
identifying an attribute/classifier from the target condition; and
identifying an identifier of one or more user satisfying the target condition among identifiers of a plurality of users stored in a plurality of database units of a plurality of affiliated companies having the identified attribute/classifier.

The identification of the attribute/classifier, for example, may be achieved by configuring the input of the target condition to enable identification of the attribute/classifier, or may be achieved by utilizing the AI function or machine-learning function of the computer system **210** based on the description of the target condition.

Step **S405:** The computer system **210** sends the identifier of the one or more user satisfying the target condition to the apparatus **220₁** of the media company P.

Alternatively, when a hash value obtained by hashing the identifier of the one or more user satisfying the target condition is used for the apparatus **220₁** of the media company P to identify a user, the computer system **210** may hash the identifier of the one or more user satisfying the target condition and send the hash value of the identifier of the one or more user satisfying the target condition to the apparatus **220₁** of the media company P instead of the identifier of the one or more user satisfying the target condition.

Step **S406:** The apparatus **220₁** of the media company P receives the identifier of the one or more user satisfying the target condition from the computer system **210.**

Step **S407:** The apparatus **220₁** of the media company P identifies an identifier of at least one user stored in the database unit **221₁** of the apparatus **220₁** of the media company P among identifiers of the one or more user satisfying the target condition. In other words, the apparatus **220₁** of the media company P identifies an identifier of at least one user that is common between both the identifier of the one or more user satisfying the target condition and the identifier of a plurality of users stored in the database unit **221₁** of the apparatus **220₁** of the media company P.

Step **S408:** The apparatus **220₁** of the media company P determines whether or not a user identifiable by the identifier of the at least one user satisfies the timing condition, and when the user identifiable by the identifier of the at least one user satisfies the timing condition, the advertisement is presented to the user identifiable by the identifier of the at least one user in the advertisement frame.

When the media company P is one of the plurality of affiliated companies affiliated with the operation company, the computer system **210** is connected to the database unit **231₃** of the media company P among the plurality of database units **231₁** to **231_{M}** of the plurality of affiliated companies. Thus, step **S405** and step **S406** of Figure **4** are omitted. The reason thereof is that since the processing based on the identifier of the one or more user satisfying the target condition is executed in step **S407'** discussed below, there is no longer the need to send the identifier of the one or more user satisfying the target condition to the apparatus **220₁** of the media company P. Furthermore, in this case, in addition to the omission of step **S407** of Figure **4****,** the computer system **210** executes step **S407'** after step **S404** (the content of the processing executed in step **S407'** is the same as the content of the processing executed in step **S407** of Figure **4**). Specifically, the computer system **210** accesses the database unit **231₃** of the media company P to identify an identifier of at least one user stored in the database unit **231₃** of the media company P among the identifiers of the one or more user satisfying the target condition in step **S407'**. The computer system **210** sends the identifier of the at least one user obtained in step **S407'** to the apparatus **220₁** of the media company P at any timing after step **S407'** and before step **S408.**

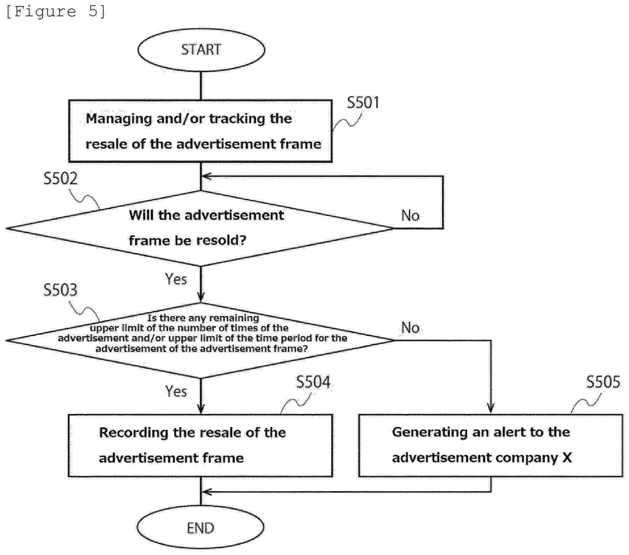

Figure **5** shows an example of the flow executed in the computer system **210.** Furthermore, the advertisement frame is sold to the advertisement company X, wherein upper limit of the number of times of the advertisement and the upper limit of the time period for the advertisement are set. Each step shown in Figure **5** is explained below.

Step **S501:** Resale of the advertisement frame sold to the advertisement company X is managed and/or tracked. This processing can be realized by, for example, the smart contract technique.

Step **S502:** It is determined whether or not the advertisement frame sold to the advertisement company X is resold from the advertisement company X to an advertisement company Y. When the determination result is "yes", the processing proceeds to step **S503,** and when the determination result is "No", the processing goes back to step **S502.**

Step **S503:** It is determined whether or not there is any remaining upper limit of the number of times of the advertisement and/or upper limit of the time period for the advertisement set in the advertisement frame sold to the advertisement company X. This processing may be executed by, for example, referring to the advertisement frame database unit **264** based on the advertisement frame ID of the advertisement frame sold to the advertisement company X. The advertisement frame ID of the advertisement frame sold to the advertisement company X may be able to be identified by managing and/or tracking of the resale of the advertisement frame. When the determination result is "Yes", the processing proceeds to step **S504,** and when the determination result is "No", the processing proceeds to step **S505.**

Step **S504:** The resale of the advertisement frame from the advertisement company X to the advertisement company Y is recorded. This processing is achieved by, for example, referring to the advertisement frame database unit **264** and updating the information within the advertisement frame database unit **264** (e.g., name and resale history of the advertisement company that is currently advertising).

Step **S505:** An alert to the advertisement company X is generated and sent to the apparatus of the advertisement company X. The alert to the advertisement company X is, for example, an alert that shows that resale to the advertisement company Y cannot be recognized, or an alert that shows that the remaining upper limit of the number of times of the advertisement and/or upper limit of the time period for the advertisement is not enough.

Furthermore, the embodiment shown in Figure **4** to Figure **5** explained an example of realizing the processing of each step shown in Figure **4** to Figure **5** by the processor unit executing the program stored in the memory unit, but the present invention is not limited thereto. The processing of at least a part of each step shown in Figure **4** to Figure **5** may be realized by a hardware configuration such as a control circuit.

Accordingly, the present invention has been exemplified using a preferable embodiment of the present invention, but the interpretation of the present invention should not be limited to this embodiment. It is understood that the scope of the present invention should be interpreted only by the Claims. It is understood that those skilled in the art can perform an equivalent range based on the description of the present invention and common general knowledge from the description of the specific preferable embodiment of the present invention.

### [Industrial Applicability]

The present invention is useful as an invention providing a computer system that enables certain and highly precise targeting advertisement compared to the past by utilizing personal information accumulated in a plurality of database units of a plurality of affiliated companies and a method, a program and the like executed in said computer system.

### [Reference Signs List]

200 system
210 computer system
220₁ to 220_{N} apparatuses of a media company
230₁ to 230_{M} apparatuses of an affiliated company
240₁ to 240_{L} apparatuses of an advertisement company
250 internet
260 database unit

## Claims

1. A computer system that enables targeting advertisement utilizing personal information accumulated in a plurality of database units of a plurality of affiliated companies,
wherein the computer system is configured to enable communication with an apparatus of a media company that manages a medium providing an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user,
wherein the computer system comprises:
a means of receiving information showing a desired advertisement condition for presenting an advertisement to the advertisement frame, wherein the desired advertisement condition comprises a target condition for identifying a target of the advertisement;
a means of obtaining an identifier of one or more user satisfying the target condition among identifiers of the plurality of users stored in each of the plurality of database units by accessing the plurality of database units; and
a means of sending the identifier of the one or more user satisfying the target condition to the apparatus of the media company.

2. The computer system of claim 1, wherein the target condition at least comprises a condition associated with a first company among the plurality of affiliated companies and a condition associated with a second company among the plurality of affiliated companies, wherein the second company is different from the first company,
wherein the means of obtaining the identifier of the one or more user satisfying the target condition comprises:
a means of accessing a first database unit of the first company to obtain an identifier of at least one user satisfying the condition associated with the first company among identifiers of users of a first group stored in the first database unit, wherein the first database unit is one of the plurality of database units;
a means of accessing a second database unit of the second company to obtain an identifier of at least one user satisfying the condition associated with the second company among identifiers of users of a second group stored in the second database unit, wherein the second database unit is one of the plurality of database units; and
a means of identifying an identifier of one or more user that is at least common between the at least one user satisfying the condition associated with the first company and the at least one user satisfying the condition associated with the second company as the identifier of the one or more user satisfying the target condition based on the identifier of the at least one user satisfying the condition associated with the first company and the identifier of the at least one user satisfying the condition associated with the second company.

3. The computer system of claim 1 or claim 2, wherein the identifier is a telephone number, or a mail address, or a combination thereof.

4. The computer system of any of claims 1 to 3, wherein the computer system further comprises a means of executing a processing for selling the advertisement frame to an advertisement company that wishes to display the advertisement on the advertisement frame.

5. The computer system of claim 4, wherein the computer system is further configured to enable communication with an apparatus of the advertisement company,
wherein information showing the desired advertisement condition is received from the apparatus of the advertisement company,
wherein the desired advertisement condition further comprises a timing condition showing a timing to present the advertisement,
wherein the computer system further comprises:
a means of notifying the timing condition to the media company in a state of being associated with the advertisement frame.

6. The computer system of claim 4 or claim 5, wherein the advertisement company is a first advertisement company,
wherein the computer system further comprises:
a means of managing and/or tracking resale of the advertisement frame from the first advertisement company to a second advertisement company, wherein the second advertisement company is different from the first advertisement company.

7. A method executed in a computer system that enables targeting advertisement utilizing personal information accumulated in a plurality of database units of a plurality of affiliated companies,
wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user,
wherein the computer system comprises a processor unit,
wherein the method comprises:
receiving, by the processor unit, information showing a desired advertisement condition for presenting an advertisement to the advertisement frame, wherein the desired advertisement condition comprises a target condition for identifying a target of the advertisement;
obtaining, by the processor unit, an identifier of one or more user satisfying the target condition among identifiers of the plurality of users stored in each of the plurality of database units by accessing the plurality of database units; and
sending, by the processor unit, the identifier of the one or more user satisfying the target condition to the apparatus of the media company.

8. A program executed in a computer system that enables targeting advertisement utilizing personal information accumulated in a plurality of database units of a plurality of affiliated companies,
wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user,
wherein the computer system comprises a processor unit,
wherein, when executed by the processor unit, the program has the processor unit at least execute the following:
receiving information showing a desired advertisement condition for presenting an advertisement to the advertisement frame, wherein the desired advertisement condition comprises a target condition for identifying a target of the advertisement;
obtaining an identifier of one or more user satisfying the target condition among identifiers of the plurality of users stored in each of the plurality of database units by accessing the plurality of database units; and
sending the identifier of the one or more user satisfying the target condition to the apparatus of the media company.

9. A computer system that enables targeting advertisement utilizing personal information accumulated in a plurality of database units of a plurality of affiliated companies,
wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein a database unit of the media company is one of the plurality of database units,
wherein the computer system comprises:
a means of receiving a desired advertisement condition for presenting an advertisement to the advertisement frame, wherein the desired advertisement condition comprises a target condition for identifying a target of the advertisement;
a means of obtaining an identifier of one or more user satisfying the target condition among identifiers of the plurality of users stored in each of the plurality of database units by accessing the plurality of database units other than the database unit of the media company;
a means of identifying an identifier of at least one user stored in the database unit of the media company among identifiers of one or more user satisfying the target condition by accessing the database unit of the media company; and
a means of sending the identifier of the at least one user to the apparatus of the media company.

10. The computer system of claim 9, wherein the target condition at least comprises a condition associated with a first company among the plurality of affiliated companies and a condition associated with a second company among the plurality of affiliated companies, wherein the second company is different from the first company,
wherein the means of obtaining the identifier of the one or more user satisfying the target condition comprises:
a means of accessing a first database unit of the first company to obtain an identifier of at least one user satisfying the condition associated with the first company among identifiers of users of a first group stored in the first database unit, wherein the first database unit is one of the plurality of database units;
a means of accessing a second database unit of the second company to obtain an identifier of at least one user satisfying the condition associated with the second company among identifiers of users of a second group stored in the second database unit, wherein the second database unit is one of the plurality of database units; and
a means of identifying an identifier of one or more user that is at least common between the at least one user satisfying the condition associated with the first company and the at least one user satisfying the condition associated with the second company as the identifier of the one or more user satisfying the target condition based on the identifier of the at least one user satisfying the condition associated with the first company and the identifier of the at least one user satisfying the condition associated with the second company.

11. The computer system of claim 9 or claim 10, wherein the identifier is a telephone number, or a mail address, or a combination thereof.

12. The computer system of any of claims 9 to 11, wherein the computer system further comprises a means of executing a processing for selling the advertisement frame to an advertisement company that wishes to display the advertisement on the advertisement frame.

13. The computer system of claim 12, wherein the computer system is further configured to enable communication with an apparatus of the advertisement company,
wherein the desired advertisement condition is received from the apparatus of the advertisement company,
wherein the desired advertisement condition further comprises a timing condition showing a timing to present the advertisement,
wherein the computer system further comprises:
a means of notifying the timing condition to the media company in a state of being associated with the advertisement frame.

14. The computer system of claim 12 or claim 13, wherein the advertisement company is a first advertisement company,
wherein the computer system further comprises:
a means of managing and/or tracking resale of the advertisement frame from the first advertisement company to a second advertisement company, wherein the second advertisement company is different from the first advertisement company.

15. A method executed in a computer system that enables targeting advertisement utilizing personal information accumulated in a plurality of database units of a plurality of affiliated companies,
wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein a database unit of the media company is one of the plurality of database units,
wherein the computer system comprises a processor unit,
wherein the method comprises:
receiving, by the processor unit, a desired advertisement condition for presenting an advertisement to the advertisement frame, wherein the desired advertisement condition comprises a target condition for identifying a target of the advertisement;
obtaining, by the processor unit, an identifier of one or more user satisfying the target condition among identifiers of the plurality of users stored in each of the plurality of database units by accessing the plurality of database units other than the database unit of the media company;
identifying, by the processor unit, an identifier of at least one user stored in the database unit of the media company among identifiers of one or more users satisfying the target condition by accessing the database unit of the media company; and
sending, by the processor unit, the identifier of the at least one user to the apparatus of the media company.

16. A program executed in a computer system that enables targeting advertisement utilizing personal information accumulated in a plurality of database units of a plurality of affiliated companies,
wherein the computer system is configured to enable communication with an apparatus of a media company that manages a medium that provides an advertisement frame, wherein the computer system is connected to the plurality of database units of the plurality of affiliated companies, wherein information regarding a plurality of users is stored in each of the plurality of database units, wherein each of information regarding a user comprises a corresponding identifier of a user, wherein a database unit of the media company is one of the plurality of database units,
wherein the computer system comprises a processor unit,
wherein, when executed by the processor unit, the program has the processor unit at least execute the following:
receiving a desired advertisement condition for presenting an advertisement to the advertisement frame, wherein the desired advertisement condition comprises a target condition for identifying a target of the advertisement;
obtaining an identifier of one or more user satisfying the target condition among identifiers of the plurality of users stored in each of the plurality of database units by accessing the plurality of database units other than the database unit of the media company;
identifying an identifier of at least one user stored in the database unit of the media company among identifiers of one or more user satisfying the target condition by accessing the database unit of the media company; and
sending the identifier of the at least one user to the apparatus of the media company.
